(19) Europäisches Patentamt / European Patent Office / Office européen des brevets

(11) **EP 3 175 528 B1**

(12) **FASCICULE DE BREVET EUROPEEN**

(45) Date de publication et mention de la délivrance du brevet:
**15.08.2018 Bulletin 2018/33**

(51) Int Cl.:
*H02J 3/01* *(2006.01)*     *B60L 11/18* *(2006.01)*
*H02M 1/12* *(2006.01)*     *H02J 7/02* *(2016.01)*

(21) Numéro de dépôt: **15733815.3**

(22) Date de dépôt: **10.06.2015**

(86) Numéro de dépôt international:
**PCT/FR2015/051523**

(87) Numéro de publication internationale:
**WO 2016/016524 (04.02.2016 Gazette 2016/05)**

(54) **PROCEDE ET DISPOSITIF DE CHARGE D'UNE BATTERIE DE VEHICULE AUTOMOBILE EN FONCTION DE L'IMPEDANCE D'UN RESEAU D'ALIMENTATION ET VEHICULE AUTOMOBILE DOTE D'UN TEL DISPOSITIF DE CHARGE**

VERFAHREN UND VORRICHTUNG ZUM LADEN EINER BATTERIE EINES KRAFTFAHRZEUGS JE NACH IMPEDANZ EINES ENERGIEVERSORGUNGSNETZES UND KRAFTFAHRZEUG MIT SOLCH EINER LADEVORRICHTUNG

METHOD AND DEVICE FOR CHARGING A BATTERY OF A MOTOR VEHICLE DEPENDING ON THE IMPEDANCE OF A POWER SUPPLY NETWORK AND MOTOR VEHICLE PROVIDED WITH SUCH A CHARGING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2014 FR 1457425**

(43) Date de publication de la demande:
**07.06.2017 Bulletin 2017/23**

(73) Titulaire: **Renault s.a.s**
**92100 Boulogne-Billancourt (FR)**

(72) Inventeurs:
• **KVIESKA, Pedro**
  **78000 Versailles (FR)**
• **MERIENNE, Ludovic**
  **91190 Gif sur Yvette (FR)**

(56) Documents cités:
**FR-A1- 2 943 188     FR-A1- 2 964 510
FR-A1- 2 992 490**

• **CHENG WAN ET AL: "Irreversible instability in three-phase voltage-source converter connected to non-ideal power grid with interacting load", ENERGY CONVERSION CONGRESS AND EXPOSITION (ECCE), 2012 IEEE, IEEE, 15 septembre 2012 (2012-09-15), pages 1406-1411, XP032467462, DOI: 10.1109/ECCE.2012.6342650 ISBN: 978-1-4673-0802-1**

**Description**

L'invention concerne un procédé et un dispositif de charge d'une batterie et, plus particulièrement, un procédé et un dispositif de charge destiné à être intégré à un véhicule automobile à traction au moins partiellement électrique pour permettre une recharge de la batterie du véhicule directement à partir d'un réseau d'alimentation électrique.

Dans des systèmes de recharge de batterie à haute tension, la puissance électrique du réseau est amenée à la batterie successivement au travers de deux convertisseurs : un abaisseur de tension (« buck ») et un élévateur de tension (« boost »). Ces deux convertisseurs permettent respectivement d'abaisser et d'élever le rapport de tension entre leur borne de sortie et leur borne d'entrée, en ouvrant et en fermant successivement une série d'interrupteurs, à une fréquence qui est commandée en fonction du courant de sortie, et/ou de la tension de sortie souhaitée.

De tels systèmes de recharge sont par exemple décrits dans la demande de brevet FR 2 943 188, qui porte sur un système de recharge embarqué pour véhicule automobile, permettant un rechargement d'une batterie du véhicule à partir d'un circuit triphasé ou monophasé, le circuit de recharge intégrant les bobines d'une machine électrique qui assure par ailleurs d'autres fonctions, comme la génération de courant ou la propulsion du véhicule.

On pourra également se référer au document FR 2 964 510 qui décrit la recharge d'une batterie à partir d'un circuit triphasé et au document FR 2 974 253 qui décrit la recharge d'une batterie à partir d'une alimentation monophasée et qui décrit en outre une architecture permettant de contrôler la puissance de charge.

Le hachage du courant tiré du réseau d'alimentation engendré par le fonctionnement de l'étage abaisseur de tension induit des composantes à haute fréquence dans le courant prélevé, c'est-à-dire des harmoniques d'ordre supérieur au fondamental du réseau de distribution qui est classiquement à 50 Hz.

Les distributeurs d'électricité imposant une norme sur les harmoniques du courant prélevé, un tel système de recharge comporte également un filtre de type RLC (Résistif-Inductif-Capacitif) à l'entrée de l'abaisseur de tension.

Un tel filtre d'entrée permet de filtrer le courant absorbé de sorte qu'il satisfasse aux contraintes de raccordement au réseau imposées par les exploitants de réseaux, en termes d'harmoniques, ainsi que celles du domaine automobile.

Un tel filtre d'entrée est également conçu pour permettre le bon fonctionnement en puissance du chargeur.

Il n'est en réalité pas adapté pour absorber le contenu harmonique renvoyé par le dispositif de charge au réseau. En d'autres termes, le courant renvoyé n'est pas parfaitement sinusoïdal. Le filtre est en fait seulement adapté pour absorber le contenu harmonique généré à une fréquence prédéterminée, en l'espèce de 10 kHz, par le hachage des courants dans l'étage abaisseur de tension.

Il a donc été proposé, dans la demande de brevet français n° FR1 358 969 non encore publiée, de compenser les harmoniques engendrés par l'étage abaisseur de tension, en utilisant des régulations permettant d'appliquer une fonction de transfert au courant prélevé sur le réseau pour le faire correspondre à un courant idéal.

Au vu de ce qui précède, le but de l'invention est de proposer un dispositif de charge d'une batterie adapté pour pouvoir être connecté à un réseau d'alimentation électrique et capable de s'opposer à l'apparition d'un contenu harmonique dans le réseau d'alimentation, tout en s'adaptant à l'impédance du réseau d'alimentation.

L'invention a donc pour objet, selon un premier aspect, un procédé de charge d'une batterie, notamment d'une batterie de véhicule automobile à traction au moins partiellement électrique, dans lequel on filtre le courant délivré par un réseau d'alimentation électrique et l'on amène la puissance électrique du réseau à la batterie via un étage abaisseur de tension et un étage élévateur de tension tout en pilotant le rapport cyclique de hachage desdits étages abaisseur et élévateur de tension, et dans lequel on compense les harmoniques engendrés par l'étage abaisseur en utilisant un étage amplificateur à gain variable.

Selon une caractéristique générale de l'invention, on détermine l'impédance du réseau d'alimentation et l'on adapte le gain variable en fonction de l'impédance du réseau.

Il est ainsi possible de modifier la fonction de transfert entre le courant prélevé sur le réseau et le courant idéal pour tenir compte de l'impédance du réseau.

Cette adaptation peut être réalisée au sein d'un chargeur qui peut ainsi adapter la régulation harmonique en fonction de l'impédance du réseau et conserver les meilleures marges de stabilité.

Il a en outre été constaté que lorsque le chargeur est destiné à être utilisé par un particulier, la mesure de l'impédance du réseau pour adapter le gain variable de la régulation mise en oeuvre par le chargeur permet, le cas échéant, d'informer l'utilisateur d'une défaillance ou d'un dysfonctionnement de son installation électrique.

Selon une autre caractéristique de l'invention, le gain est adapté en utilisant une valeur de gain pour l'amplificateur extraite d'une cartographie dans laquelle sont stockées, pour différentes valeurs respectives d'impédance, des valeurs d'adaptation de gain.

Dans un mode de mise en oeuvre, le procédé selon l'invention comprend une étape préalable de stockage de valeurs de gain dans la cartographie au cours de laquelle :

a) on mesure une première marge de gain admissible pour une première valeur relativement basse d'impédance ;
b) on mesure une deuxième marge de gain admissible pour une deuxième valeur relativement haute d'impédance ;

c) on détermine une valeur d'adaptation de gain pour ladite deuxième valeur à partir des première et deuxième marges de gain ; et

d) on répète les étapes b) et c) pour différentes deuxièmes valeurs d'impédance.

Selon encore une autre caractéristique du procédé selon l'invention, l'impédance du réseau est déterminée à partir de mesures de courant et de tension avant la charge de la batterie et après la charge.

On peut prévoir que l'impédance du réseau est déterminée à partir de l'amplitude et de la phase de la composante de signaux de mesure à la fréquence nominale du réseau d'alimentation.

Dans un mode de mise en oeuvre, on adapte le gain de l'amplificateur variable en fonction de la résistance du réseau.

L'invention a également pour objet, selon un deuxième aspect, un dispositif de charge d'une batterie, notamment d'une batterie de véhicule automobile à traction au moins partiellement électrique, comprenant un étage de filtrage destiné à être raccordé à un réseau d'alimentation électrique, un étage abaisseur de tension raccordé à l'étage de filtrage et un étage élévateur de tension couplé à l'étage abaisseur de tension et destiné à être raccordé à la batterie, et une unité de régulation apte à imposer des rapports cycliques de hachage à l'étage abaisseur de tension et à l'étage élévateur de tension et comprenant des moyens de compensation des harmoniques engendrés par l'étage abaisseur de tension dans l'étage de filtrage, agissant sur l'étage abaisseur de tension et comprenant un étape d'amplification à gain variable.

L'unité de régulation comprend des moyens pour déterminer l'impédance du réseau d'alimentation et des moyens pour adapter le gain de l'étage d'amplification en fonction de la valeur de l'impédance du réseau.

Dans un mode de réalisation, l'unité de régulation comprend un régulateur principal apte à déterminer un rapport cyclique d'un signal de commande de commutation de l'étage abaisseur de tension et un régulateur secondaire de compensation des harmoniques apte à déterminer un rapport cyclique d'un signal de compensation d'harmoniques combiné audit signal de commande.

Le régulateur secondaire peut être associé à un comparateur apte à comparer le courant prélevé sur le réseau et un courant idéal compensé pour élaborer le rapport cyclique du signal de compensation à partir du résultat de ladite comparaison.

Par exemple, le courant idéal compensé est élaboré à partir d'une boucle à verrouillage de phase.

Selon une autre caractéristique du dispositif de charge selon l'invention, le régulateur secondaire comporte un filtre elliptique assurant le filtrage du résultat de ladite comparaison associé audit étage d'amplification à gain réglable dont la sortie est raccordée à un diviseur de courant de sorte que le rapport cyclique $\alpha_{harm}$ du signal de compensation est élaboré à partir de la relation :

$$\alpha_{harm} = \frac{K_p \, \Delta I_{filtré}}{I_n}$$

dans laquelle :

Kp désigne le gain réglable ;
$\Delta I_{filtré}$ est la sortie du filtre elliptique ; et
$I_n$ est le courant de sortie de l'étage abaisseur de tension.

L'invention a encore pour objet un véhicule automobile à traction au moins partiellement électrique comportant un dispositif de charge tel que défini ci-dessus.

D'autres buts, caractéristiques et avantages de l'invention apparaîtront à la lecture de la description suivante, donnée uniquement à titre d'exemple non limitatif, et faite en référence aux dessins annexés sur lesquels :

- La figure 1 illustre un dispositif de recharge d'une batterie selon un mode de réalisation de l'invention ;
- La figure 2 est un schéma illustrant, de manière générale, la structure de l'unité de régulation ;
- La figure 3 montre des courbes illustrant l'élaboration du courant idéal ;
- La figure 4 est un schéma illustrant un mode de réalisation de l'unité de régulation ;
- Les figures 5 et 6 montrent des courbes illustrant le fonctionnement du filtre elliptique ;
- La figure 7 montre l'influence de la variation d'impédance du réseau dans la courbe de la figure 5, et notamment dans le fonctionnement du filtre elliptique ;
- La figure 8 est un schéma illustrant la structure générale d'un chargeur, servant à illustrer la mesure de l'impédance du réseau pour modifier le gain variable du chargeur ; et
- Les figures 9a, 9b, 9c et 9d montrent l'évolution des tensions et des courants dans le cas d'un réseau à faible impédance et dans le cas d'un réseau à forte impédance, hors charge et en charge.

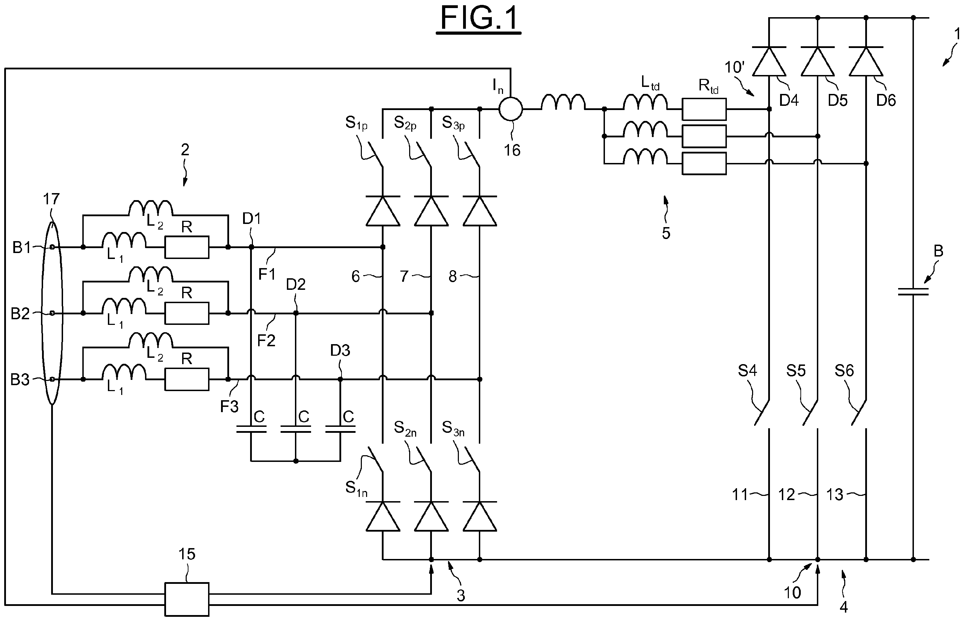

Sur la figure 1, est présenté de manière schématique un dispositif de charge d'une batterie d'un véhicule automobile à traction électrique à partir d'un réseau d'alimentation triphasé, selon un mode de réalisation.

Le dispositif de recharge 1 comprend un étage de filtrage 2, un étage abaisseur de tension 3 couplé à l'étage de filtrage 2, et un étage élévateur de tension 4 couplé à l'étage abaisseur de tension 3 via une machine électrique 5.

Le dispositif 1 est ici, par exemple, destiné à être couplé à une alimentation triphasée. Il comprend trois bornes $B_1$, $B_2$, $B_3$ couplées en entrée de l'étage de filtrage 2, et aptes à être couplées à un réseau d'alimentation. On notera toutefois qu'en recharge monophasée, seules les entrées $B_1$ et $B_2$ sont couplées à un réseau d'alimentation monophasé.

Chaque borne d'entrée $B_1$, $B_2$ et $B_3$ est couplée à une branche de filtrage de l'étage de filtrage 2. Chaque branche de filtrage comprend deux branches en parallèle, portant l'une une inductance de valeur $L_2$ et l'autre portant en série une inductance de valeur $L_1$ et une résistance de valeur R.

Ces deux branches de filtrage sont chacune couplées en sortie en un point respectivement nommé $D_1$, $D_2$, $D_3$ pour chacune des branches de filtrage, à un condensateur de capacité C, les extrémités opposées des condensateurs de capacité C étant reliées entre elle pour former un filtre capacitif en étoile. L'ensemble des résistances de valeurs R, des inductances de valeurs $L_1$ ou $L_2$, et des condensateurs de capacité C constitue un filtre de type RLC à l'entrée de l'abaisseur de tension 3.

L'étage abaisseur de tension 3 est couplé à l'étage de filtrage 2 par les points $D_1$, $D_2$ et D3. L'abaisseur de tension 3 comprend trois branches parallèles 6, 7 et 8, portant chacune deux interrupteurs tels que $S_{1n}$ et $S_{1p}$ commandés par une unité de régulation 15 et deux diodes.

Chaque entrée $D_1$, $D_2$ ou $D_3$ de l'abaisseur de tension est connectée, respectivement par une branche $F_1$, $F_2$ et $F_3$ à un point de connexion situé entre deux interrupteurs tels que $S_{1n}$ et $S_{1p}$, $S_{2n}$ et $S_{2p}$ ou $S_{3n}$ et $S_{3p}$ d'une même branche respectivement 6, 7 et 8.

Les extrémités communes des branches 6, 7 et 8 constituent deux bornes de sortie de l'abaisseur de tension 3. L'une des bornes est reliée à la borne « - » de la batterie B ainsi qu'à une première entrée 10 de l'étage élévateur de tension 4. L'autre de ces bornes est connectée à une première borne d'une machine électrique 5, dont l'autre borne est connectée à une seconde entrée 10' de l'élévateur de tension 4.

L'étage élévateur de tension 4 comprend ici trois branches parallèles 11, 12 et 13 comprenant chacune une diode $D_4$, $D_5$ et $D_6$ associée à un interrupteur $S_4$, $S_5$ et $S_6$ pilotables par l'unité de régulation 15 de manière indépendante. Ces interrupteurs $S_4$, $S_5$ et $S_6$ sont situés sur une branche reliant la première entrée 10 de l'élévateur de tension 4 et la borne « + » de la batterie B.

Comme on le voit, la batterie B est connectée en parallèle sur les trois branches 11, 12 et 13 de l'étage élévateur de tension.

La machine électrique 5 est ici assimilable à trois branches parallèles comprenant chacune une résistance $R_{td}$ en série avec une bobine d'inductance $L_{td}$ et raccordée entre la diode $D_4$, $D_5$ ou $D_6$ et l'interrupteur pilotable $S_4$, $S_5$ et $S_6$ correspondant des branches respectives 11, 12 et 13.

On voit enfin sur la figure 1 que le dispositif de recharge 1 est complété par un organe 16 de mesure du courant de sortie $I_n$ de l'étage abaisseur de tension 3. Ce courant $I_n$ est désigné par la suite par le terme de courant de neutre en raison du fait que ce courant arrive au niveau d'une interconnexion en étoile des trois bobinages statoriques de la machine électrique 5, en sortie de l'étage abaisseur 3.

Le dispositif de recharge est encore complété par un organe 17 de mesure du courant prélevé sur le réseau.

Comme cela sera décrit en détail par la suite, ces courants de mesure sont délivrés à l'unité de régulation 15 pour, notamment, assurer une compensation des harmoniques créées lors du fonctionnement de l'étage abaisseur 3 et susceptibles d'être injectés dans le réseau après avoir été amplifiés par le filtre d'entrée 2.

En fonctionnement, l'unité de régulation 15 détermine, comme cela est connu, le rapport cyclique de signaux de commande de commutation des interrupteurs des étages abaisseurs et élévateurs de tension, constitués par exemple par des transistors. Il s'agit de préférence de transistors permettant une commutation rapide, par exemple des transistors de type IGBT (Insulation Gate Bipolar Transistor).

L'unité de régulation 15 peut, par exemple, comprendre un premier module de contrôle permettant de déterminer le rapport cyclique de hachage de l'étage abaisseur de tension et un second module de contrôle permettant de déterminer le rapport cyclique de hachage de l'étage élévateur de tension.

Comme cela est connu, pour évaluer les rapports cycliques, l'unité de régulation reçoit par exemple en entrée les valeurs de la tension d'alimentation du réseau, de l'intensité du courant traversant la machine électrique, de la tension de la batterie B et de l'intensité du courant traversant la batterie.

En ce qui concerne le module de contrôle dédié au pilotage de l'étage abaisseur de tension 3, l'unité de régulation 15 pilote les interrupteurs de cet étage abaisseur de manière à réduire, voire annuler les harmoniques engendrées lors du hachage.

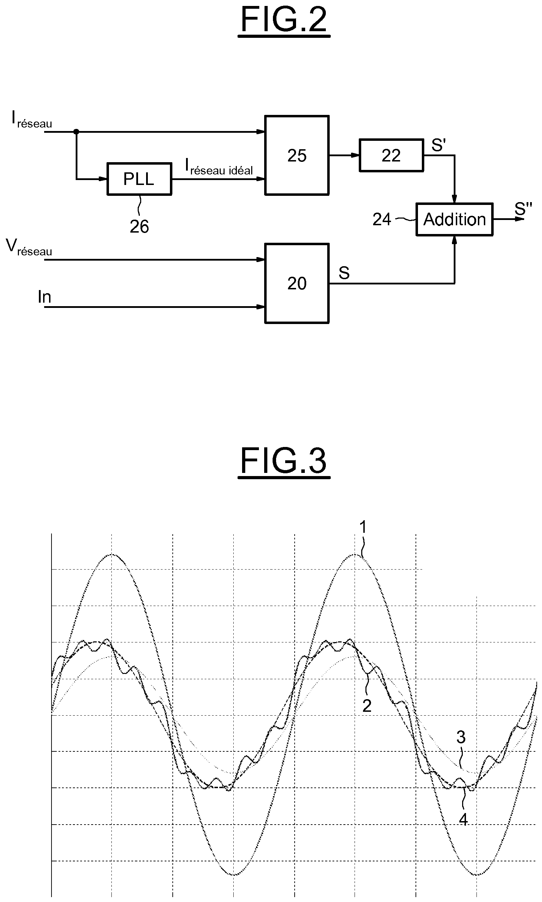

On a représenté sur la figure 2 un exemple de réalisation du premier module de l'unité de régulation permettant de déterminer le rapport cyclique de hachage de l'étage abaisseur de tension.

Comme on le voit, l'unité de régulation comporte un régulateur principal 20 recevant, en entrée, une valeur de mesure de la tension $V_{réseau}$ du réseau et du courant de neutre $I_n$ pour élaborer un signal S de commande de commutation de l'étage abaisseur de tension, de manière connue en soi.

L'unité de régulation comporte par ailleurs un régulateur secondaire 22 de compensation des harmoniques destiné à évaluer le rapport cyclique d'un signal S' de compensation d'harmoniques destiné à être combiné au signal S de commande de commutation au moyen d'un additionneur 24 pour élaborer un signal de commande S" final.

Le régulateur secondaire 22 assure la comparaison entre la valeur du courant du $I_{réseau}$ et la valeur d'un courant idéal $I_{réseau\ idéal}$ au moyen d'un soustracteur 25.

On se référera à présent à la figure 3, sur laquelle la courbe 1 représente la tension du réseau, la courbe 2 désigne le courant prélevé sur le réseau, la courbe 3 désigne le courant désiré et la courbe 4 désigne le courant du réseau idéal.

On voit que, pour les raisons exposées précédemment, le courant prélevé sur le réseau n'est pas purement sinusoïdal à 50 Hertz en raison de son contenu harmonique.

A partir de ce courant $I_{réseau}$, on utilise une boucle à verrouillage de phase PLL 26 qui permet d'extraire la pulsation wt du courant du réseau, mesuré par l'organe de mesure 17 pour élaborer le courant $I_{réseau\ idéal}$ (courbe 4).

Ainsi, à partir du résultat de la soustraction mise en oeuvre par le soustracteur 25, le régulateur secondaire est capable d'élaborer le signal S" de compensation permettant d'ajouter une composante curative au signal de commande S issu du régulateur principal 20 et de réduire de la sorte le contenu harmonique du réseau.

On notera que, pour cela, l'unité de régulation tient avantageusement compte du passage par l'étage de filtrage 2.

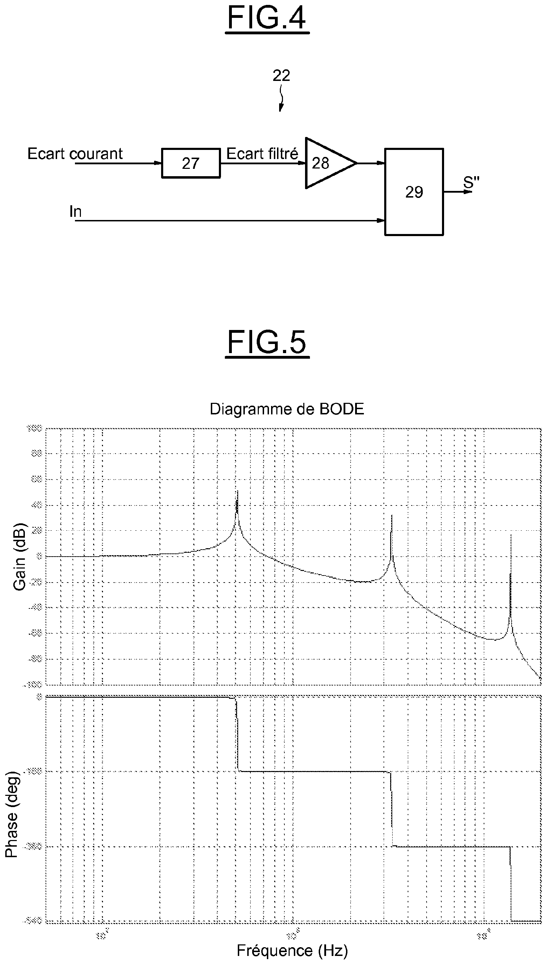

Dans ce but, et comme visible sur la figure 4, le régulateur secondaire 22 comporte un filtre elliptique d'entrée 27 recevant, en entrée, le résultat de la comparaison délivré par le soustracteur 25 et un étage amplificateur à gain variable 28 recevant en entrée le résultat de la comparaison filtrée et dont la sortie est raccordée à un diviseur 29 assurant la division entre la sortie de l'étage d'amplification 28 à gain variable et la valeur de mesure du courant de neutre fournie par l'organe de mesure 16 pour fournir le signal S" de compensation d'harmoniques.

En d'autres termes, le rapport cyclique $\alpha_{harm}$ du signal de compensation d'harmoniques S" est élaboré à partir de la relation suivante :

$$\alpha_{harm} = \frac{K_p\ \Delta I_{filtré}}{I_n}$$

dans laquelle :

Kp désigne le gain réglable de l'étage d'amplification 28 ;
$\Delta I_{filtré}$ est la sortie du filtre elliptique 27 ; et
$I_n$ est le courant de sortie de l'étage abaisseur de tension.

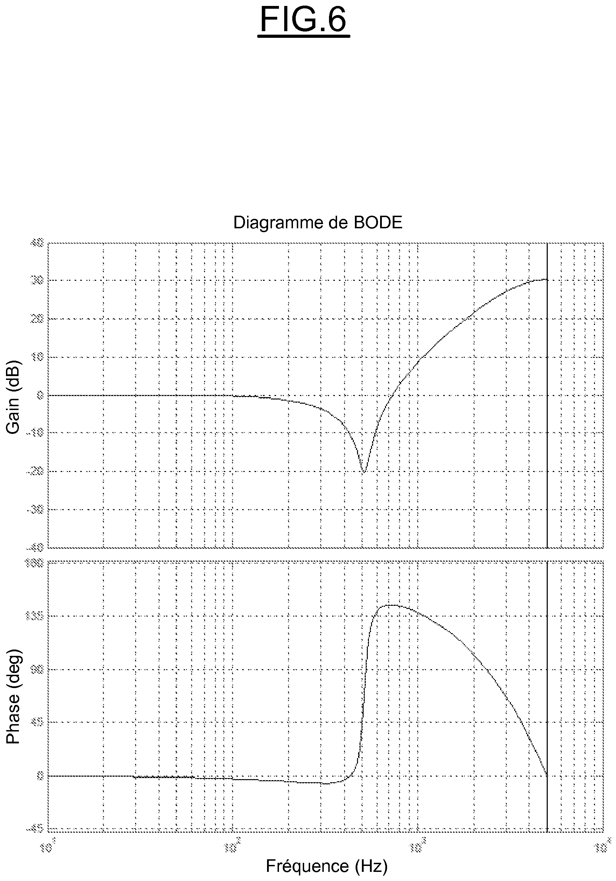

L'avantage de l'utilisation du filtre elliptique apparaîtra à l'examen des figures 5 et 6.

La figure 5 montre le diagramme de Bode traduisant la modification du courant entre l'étage de filtrage 2 et l'étage abaisseur 3 due à la modification de la commande de l'étage abaisseur de tension pour compenser les harmoniques.

On constate une inversion de phase autour de 500 Hertz, ce qui signifie qu'un simple correcteur proportionnel n'est pas optimal pour mettre en oeuvre le régulateur secondaire 22.

En effet, un tel correcteur pourrait certes compenser les harmoniques inférieures à 500 Hertz mais, au-delà, il les empirerait.

Pour pouvoir agir sur l'ensemble des harmoniques du réseau, on utilise le filtre elliptique 27 permettant d'éviter l'inversion de phase au-delà de 500 Hertz. On a représenté sur la figure 6 le diagramme de Bode d'un tel filtre.

On notera que la fonction de transfert entre le courant prélevé sur le réseau et le courant désiré, et en particulier la fonction de transfert du régulateur secondaire 22 de compensation des harmoniques change en fonction de l'impédance de ligne du réseau d'alimentation.

Bien que l'influence de l'impédance de ligne du réseau impacte les deux régulateurs 20 et 22, son influence est plus importante en ce qui concerne le deuxième régulateur 22 de sorte que l'impact sur la compensation des harmoniques est prépondérant.

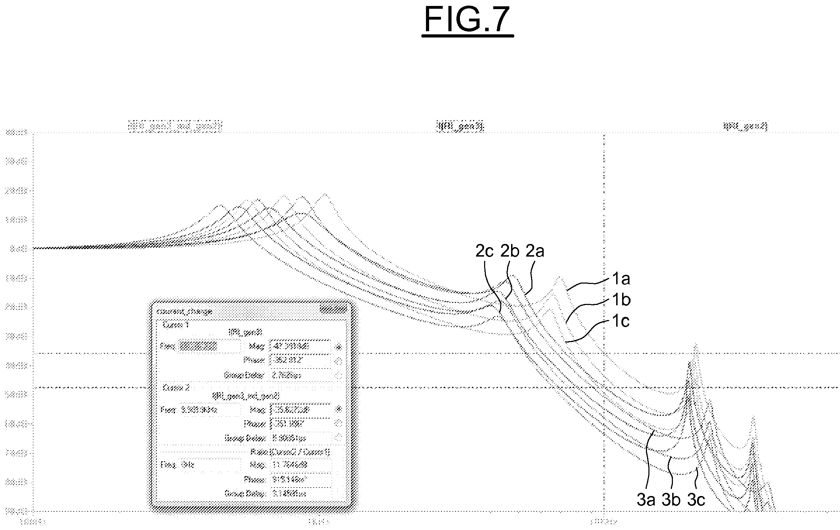

On pourra à cet égard se référer à la figure 7 qui illustre qu'une modification de l'impédance de ligne engendre une modification consécutive des résonances.

Sur la figure 7, on a en effet représenté, pour trois modes de réalisation différents d'un chargeur, référencés respectivement 1, 2 et 3, l'influence d'une augmentation de l'impédance du réseau d'alimentation, à partir d'une valeur d'impédance relativement faible (courbes la, 2a et 3a).

On constate qu'une augmentation de l'impédance du réseau visible sur les courbes 1b, 1c d'une part, sur les courbes 2b, 2c d'autre part et enfin sur les courbes 3b et 3c qui correspondent respectivement à des valeurs croissantes d'impédance, implique une augmentation de l'amortissement de la fonction de transfert entre le courant prélevé et le courant désiré.

En d'autres termes, plus la résistance du réseau et l'inductance du réseau sont importantes, plus on amortit la courbe d'amplitude du courant en fonction de la fréquence ainsi que la fréquence des résonnances.

Il convient par ailleurs de noter que la régulation est mise en oeuvre sur les zones de résonance, c'est-à-dire au voisinage des pics de la courbe du diagramme de Bode de la figure 7. Par conséquent, les marges de stabilité ne sont ici pas très grandes. Par stabilité, on entend une réponse bornée à une excitation bornée. Il est toutefois souhaitable de conserver les mêmes marges de stabilité tant pour les faibles impédances que pour les fortes impédances.

Il s'agit donc, pour les faibles impédances, de diminuer le gain, ou, à fortes impédances pour lesquelles la résonnance est amortie, d'augmenter le gain et, par conséquent, conserver la même marge de gain.

Il s'agit donc de modifier le gain de l'étage d'amplification 28 à gain variable (figure 4) en fonction de l'impédance du réseau. On notera que, dans l'impédance de ligne il y a toujours un terme résistif ainsi qu'un terme inductif. Concernant les marges de stabilité, c'est la valeur de la résistance R du réseau qui a l'effet le plus important. Par conséquent, le gain variable de l'étage d'amplification 28 est adapté en fonction d'une valeur mesurée de la résistance de ligne du réseau.

Divers modes de réalisation peuvent être utilisés pour mesurer la résistance de ligne du réseau d'alimentation.

Par exemple, on peut définir un gain à faible impédance c'est-à-dire pour une résistance de ligne de l'ordre de quelques milliohms et mesurer la marge de gain en augmentant progressivement le gain variable de l'étage d'amplification jusqu'à la limite de l'instabilité, c'est-à-dire jusqu'à obtenir une réponse non bornée à une excitation bornée. Par exemple, si l'instabilité arrive lorsque l'on double le gain, la marge de gain est de 6 dB.

On connecte ensuite une forte impédance en sortie du chargeur, par exemple en connectant un câble de grande longueur, en amont du véhicule automobile. On pourra par exemple considérer que ce câble a une résistance de 1 ohm.

Dans cette configuration, on répète la procédure précédente, en augmentant le gain progressivement jusqu'à la limite de l'instabilité. Par exemple, si l'instabilité arrive lorsque l'on multiplie le gain par 6, la marge de gain est alors de 15,5 dB.

Dans l'exemple considéré, la marge de gain supplémentaire est de 9,5 dB à 1 ohm.

Pour conserver la marge initiale, on multiplie le gain par $10^{9,5/20}$, soit par trois.

On applique cette procédure pour différentes valeurs de résistance. On obtient ainsi une cartographie dans laquelle sont stockées des valeurs d'adaptation de gain en fonction de la résistance du réseau. Plus la résistance du réseau est élevée, plus le gain proportionnel pourra être important tout en conservant une marge de stabilité désirée, ici de 6 dB au minimum.

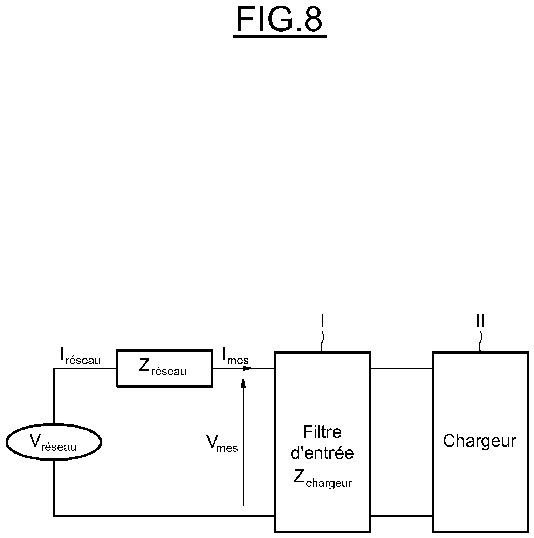

On se référera enfin à la figure 8, pour décrire l'estimation de l'impédance du réseau.

Sur cette figure 8, on a schématiquement représenté le filtre d'entrée I du chargeur ainsi que le chargeur II proprement dit. On a :

$$V_{reseau} - Vmes_{horscharge} = Z_{reseau} Imes_{Shorsch\,arg\,e} \quad et$$
$$V_{reseau} - Vmes_{encharge} = Z_{reseau} Imes_{Sench\,arg\,e} \qquad (\text{équations 1})$$

dans lesquelles $V_{reseau}$ désigne la tension du réseau ;

- $Vmes_{horscharge}$ correspond à la tension mesurée du réseau hors charge ;
- $Z_{reseau}$ désigne l'impédance du réseau ;
- $Imes_{horscharge}$ désigne le courant mesuré du réseau hors charge ;
- $Vmes_{encharge}$ désigne la tension mesurée du réseau en charge ; et
- $Imes_{encharge}$ désigne le courant mesuré du réseau en charge.

On peut alors écrire :

$$Z_{reseau} = \frac{Vmes_{Sench\,arg\,e} - Vmes_{Shorsch\,arg\,e}}{Imes_{Shorsch\,arg\,e} - Imes_{Sench\,arg\,e}} \qquad (\text{équation 2})$$

Dans ces équations, les variables peuvent être exprimées en valeurs complexes pour représenter l'amplitude et la phase, soit :

$$Z_{reseau} = R_{reseau} + jL_{reseau}\omega_{reseau}$$
$$V_{mes} = Ve^{j\omega reseau + \varphi v}$$
$$I_{mes} = Ie^{j\omega reseau + \varphi i}$$

(équations 3)

dans laquelle

-$Z_{réseau}$ correspond à l'impédance du réseau

$\omega_{réseau}$ correspond à la pulsation du réseau

-$\varphi v$ correspond à la phase de la tension du réseau ; et

-$\varphi i$ correspond à la phase du courant du réseau.

Pour obtenir ces mesures, on peut enregistrer une période électrique du signal d'alimentation fourni par le réseau et extraire l'amplitude et la phase de la composante à 50 Hertz du signal de mesure de la tension et du réseau par rapport à l'horloge interne du chargeur. Typiquement, on utilise une boucle à verrouillage de phase PLL afin d'extraire la composante à 50 Hertz des mesures.

Dans le contrôleur du chargeur, ces calculs sont déjà disponibles. On initialise une horloge que l'on remet à zéro toutes les 20 millisecondes (période électrique du réseau). On enregistre une période hors charge synchronisée sur cette horloge et l'on fait de fait de même en charge.

Ainsi, le référentiel des phases est bien le même pour tous les enregistrements, ce qui permet d'appliquer les équations 3 ci-dessus.

Dans chaque enregistrement, pour obtenir l'amplitude, on considère la valeur maximale de la mesure sur une période électrique. Pour s'assurer de la cohérence de la mesure, on compare cette donnée à la valeur minimale de la mesure. Cette valeur minimale est l'opposée de la valeur maximale puisque la tension est centrée. Puis, pour obtenir la phase, on compte le temps jusqu'à ce que la mesure croise le 0 en montant et l'on multiplie ce temps par la pulsation électrique soit 314.16rad/s.

A partir des enregistrements effectués et comme indiqué précédemment, on est en mesure d'extraire l'information amplitude en charge et hors charge, nommée $\overline{V_1}$, $\overline{V_2}$, $\overline{I_1}$ et $\overline{I_2}$ (avec 1 pour hors charge et 2 pour en charge) ainsi que les phases de chaque enregistrement par rapport à l'horloge interne du chargeur, (nommées ($\varphi_{V_1}$, ($\varphi_{V_2}$, ($\varphi_{I_1}$ et ($\varphi_{I_2}$), comme expliqué ci-dessus.

A partir des équations précédentes, on peut déduire :

$$R_{réseau} = \frac{\overline{V_2}\,\overline{I_1}\cos\left(\varphi_{V_2} - \varphi_{I_1}\right) + \overline{V_1}\,\overline{I_2}\cos\left(\varphi_{V_1} - \varphi_{I_2}\right) - \overline{V_1}\,\overline{I_1}\cos\left(\varphi_{V_1} - \varphi_{I_1}\right) - \overline{V_2}\,\overline{I_2}\cos\left(\varphi_{V_2} - \varphi_{I_2}\right)}{\overline{I_1}^2 + \overline{I_2}^2 - 2\overline{I_1}\,\overline{I_2}\cos\left(\varphi_{I_1} - \varphi_{I_2}\right)}$$

(équation 4)

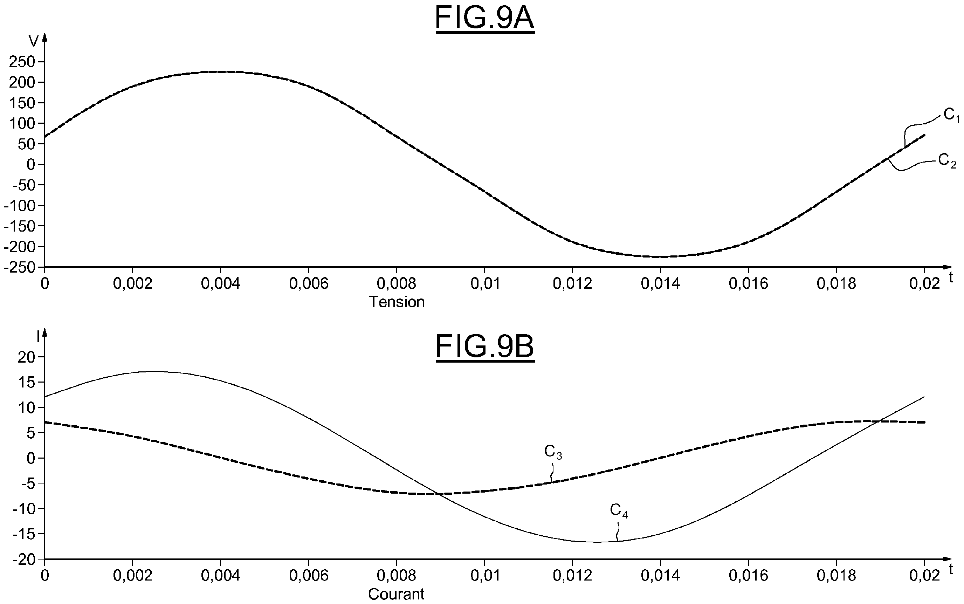

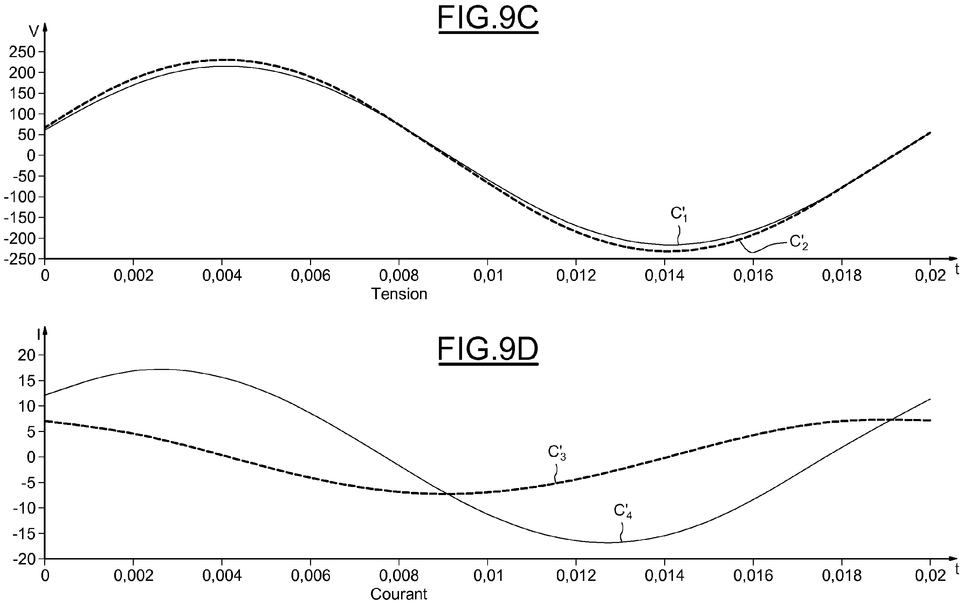

On se référera aux figures 9A, 9B, 9C et 9D qui montrent l'évolution de la tension et du courant dans le cas d'un réseau de faible impédance (figures 9A et 9B) et dans le cas d'un réseau de forte impédance (figures 9C et 9D).

Sur les figures 9A et 9B, les courbes C1 et C2 correspondent à la tension hors charge et en charge respectivement et les courbes C3 et C4 correspondent aux courants hors charge et en charge, respectivement.

Sur les figures 9C et 9D, les courbes C'1 C'2 correspondent respectivement à la tension hors charge et en charge et les courbes C'3 et C'4 correspondent respectivement aux courants hors charge et en charge.

Comme on le voit sur ces figures, dans le cas d'un réseau à faible impédance, les tensions en charge et hors charge sont sensiblement identiques. On peut au contraire constater un plus gros écart entre les tensions en charge et hors charge lorsque le réseau est de moins bonne qualité, c'est-à-dire lorsque son impédance augmente.

Sur les premières figures 9A et 9B, on peut extraire : $\overline{V_1}$ = 230V, $\overline{V_2}$ = 228.5V, $\overline{I_1}$ = 7.22A, $\overline{I_2}$ = 16.68A, $\varphi_{V_1}$ = 19.8°, $\varphi_{V_2}$ = 19.8°, $\varphi_{I_1}$ = 108° et $\varphi_{I_2}$ = 45°

On obtient alors :

$R_{réseau}$ = 0.1009Ω pour une valeur réelle à 0.1Ω

Il s'agit d'un bon réseau, avec une faible impédance de ligne.

En revanche sur les figures 9C et 9D, on peut extraire : $\overline{V_1}$ = 232V, $\overline{V_2}$ = 217V, $\overline{I_1}$ = 7.29A, $\overline{I_2}$ = 16.84A, $\varphi_{V_1}$ = 18°,

$\varphi_{V_2}$ =16.2°, $\varphi_{I_1}$ ] =106.2° et $\varphi_{I_2}$ = 43.2°

D'où en appliquant la même formule

$R_{réseau}$ =1.0097Ω pour une valeur réelle à 1Ω

Ceci est ce qu'on peut qualifier de mauvais réseau, avec une forte impédance de ligne.

On considèrera par exemple un utilisateur situé dans une zone où le réseau est très mauvais, soit avec une résistance réseau de l'ordre de 1Ω et qui utilise un véhicule automobile pour rouler en moyenne 80km par jour. Il utilise en moyenne 10kWh de sa batterie. Pour faire la recharge, il utilise une borne de 16A. Il doit effectuer donc à chaque fois 4h de charge pour faire le plein d'énergie. Avec cette puissance de charge et cette résistance réseau, il y a en charge environ 100W de perte dans le câblage depuis le véhicule jusqu'au distributeur. On obtient 0.4kWh de perte à chaque charge. En considérant que l'utilisateur recharge son véhicule 250 fois par an, il y a donc une perte due à cette résistance réseau importante de 100kWh par an, soit une perte de 95€ annuelle.

Cette résistance élevée peut être due en partie à une mauvaise installation électrique par le fournisseur d'électricité. Dans ce cas, la perte est subie par le distributeur et le gain économique est réduit. Elle peut également être due à l'ajout d'une rallonge électrique de faible diamètre par l'utilisateur qui supporte dans ce cas la perte d'énergie.

Dans les 2 cas, informer l'utilisateur de la perte potentielle peut lui faire se poser des questions sur la façon dont il utilise sa borne pour voir si la perte se situe chez lui ou pas. Cela peut également le rendre sensible à ne pas utiliser une rallonge pour charger son véhicule.

## Revendications

1. Procédé de charge d'une batterie, notamment d'une batterie de véhicule automobile à traction au moins partiellement électrique, dans lequel on filtre le courant délivré par un réseau d'alimentation électrique et l'on amène la puissance électrique du réseau à la batterie (B) via un étage abaisseur de tension (3) et un étage élévateur de tension (4) tout en pilotant les rapports cycliques de hachage desdits étages abaisseur et élévateur de tension et dans lequel on compense les harmoniques engendrés par l'étage abaisseur de tension (3) en utilisant un étage d'amplification (28) à gain variable, **caractérisé en ce qu'**on détermine l'impédance du réseau d'alimentation et l'on adapte le gain variable en fonction de l'impédance du réseau.

2. Procédé selon la revendication 1, dans lequel le gain est adapté en utilisant une valeur de gain pour l'étage d'amplification (28) extraite d'une cartographie dans laquelle sont stockées, pour différentes valeurs respectives d'impédance, des valeurs d'adaptation de gain.

3. Procédé selon la revendication 2, comprenant une étape préalable de stockage de valeurs de gain dans la cartographie, au cours de laquelle :

   a) on mesure une première marge de gain pour une première valeur relativement basse d'impédance ;
   b) on mesure une deuxième marge de gain admissible pour une deuxième valeur relativement haute d'impédance ;
   c) on détermine une valeur d'adaptation de gain pour ladite deuxième valeur à partir des première et deuxième marges de gain ; et
   d) on répète les étapes b) et c) pour différentes deuxièmes valeurs de l'impédance.

4. Procédé selon l'une quelconque des revendications 1 à 3, dans lequel l'impédance du réseau est déterminée à partir de mesures de courant et de tension avant la charge de la batterie et après la charge.

5. Procédé selon la revendication 4, dans lequel l'impédance du réseau est déterminée à partir de l'amplitude et de la phase de la composante de signaux de mesure à la fréquence nominale du réseau d'alimentation.

6. Procédé selon l'une quelconque des revendications 1 à 5, dans lequel on adapte le gain de l'amplificateur variable en fonction de la résistance du réseau.

7. Dispositif de charge d'une batterie, notamment d'une batterie de véhicule automobile à traction au moins partiellement électrique, comprenant un étage de filtrage (2) destiné à être raccordé à un réseau d'alimentation électrique, un étage abaisseur de tension (3) raccordé à l'étage de filtrage, un étage élévateur de tension (4) couplé à l'étage abaisseur de tension et destiné à être raccordé à la batterie (B), et une unité de régulation (15) apte à imposer des rapports cycliques de hachage à l'étage abaisseur de tension et à l'étage élévateur de tension et comprenant des moyens de compensation des harmoniques engendrés par l'étage abaisseur de tension (3) dans l'étage de filtrage, agissant sur l'étage abaisseur de tension et comprenant un étage d'amplification (28) à gain variable, **caractérisé en ce que** l'unité de régulation (15) comprend des moyens pour déterminer l'impédance du réseau d'alimentation et des moyens pour adapter le gain de l'étage d'amplification en fonction de la valeur de l'impédance du réseau.

8.  Dispositif de charge selon la revendication 7, dans lequel l'unité de régulation comprend un régulateur principal (20) apte à déterminer un rapport cyclique d'un signal de commande (S) de commutation de l'étage abaisseur de tension et un régulateur secondaire (22) de compensation des harmoniques apte à déterminer un rapport cyclique d'un signal de compensation (S') d'harmoniques combiné audit signal de commande.

9.  Dispositif de charge selon la revendication 8, dans lequel le régulateur secondaire (22) est associé à un comparateur (25) apte à comparer le courant prélevé sur le réseau (I$_{réseau}$) et un courant idéal compensé (I$_{réseau\ ideal}$) pour élaborer le rapport cyclique du signal de compensation (S') à partir du résultat de ladite comparaison.

10. Dispositif de charge selon la revendication 9, dans lequel le courant idéal compensé est élaboré à partir d'une boucle à verrouillage de phase (26).

11. Dispositif de charge selon la revendication 10, dans lequel le régulateur secondaire comporte un filtre elliptique (27) assurant le filtrage du résultat de ladite comparaison, associé audit étage d'amplification (28) à gain réglable dont la sortie est raccordée à un diviseur de courant (29) de sorte que le rapport cyclique ($\alpha_{harm}$) du signal de compensation est élaboré à partir de la relation :

$$\alpha_{harm} = \frac{\overline{K}_p\ \Delta I_{filtré}}{I_n}$$

dans laquelle :

Kp désigne le gain réglable ;
$\Delta I_{filtré}$ est la sortie du filtre elliptique ; et
I$_n$ est le courant de sortie de l'étage abaisseur de tension (3).

12. Véhicule automobile à traction au moins partiellement électrique, **caractérisé en ce qu'**il comporte un dispositif de charge selon l'une quelconque des revendications 7 à 11.

**Patentansprüche**

1.  Verfahren zum Laden einer Batterie, insbesondere einer Batterie eines Kraftfahrzeugs mit wenigstens teilweise elektrischem Antrieb, wobei der von einem Stromversorgungsnetz gelieferte Strom gefiltert wird und die elektrische Leistung des Netzes der Batterie (B) über eine Spannungsminderungsstufe (3) und eine Spannungserhöhungsstufe (4) zugeführt wird, bei gleichzeitiger Steuerung der zyklischen Zerhackungsverhältnisse der Spannungsminderungs- und der Spannungserhöhungsstufe, und wobei die von der Spannungsminderungsstufe (3) erzeugten Harmonischen unter Verwendung einer Verstärkungsstufe (28) mit variablem Verstärkungsfaktor kompensiert werden, **dadurch gekennzeichnet, dass** die Impedanz des Versorgungsnetzes bestimmt wird und der variable Verstärkungsfaktor in Abhängigkeit von der Impedanz des Netzes angepasst wird.

2.  Verfahren nach Anspruch 1, wobei der Verstärkungsfaktor unter Verwendung eines Verstärkungsfaktorwertes für die Verstärkungsstufe (28) angepasst wird, der aus einem Kennfeld entnommen wurde, in welchem für verschiedene jeweilige Impedanzwerte Verstärkungsfaktor-Anpassungswerte gespeichert sind.

3.  Verfahren nach Anspruch 2, welches einen vorausgehenden Schritt der Speicherung von Verstärkungsfaktorwerten in dem Kennfeld umfasst, in welchem:

a) ein erster Verstärkungsfaktorbereich für einen ersten, relativ niedrigen Impedanzwert gemessen wird;
b) ein zweiter zulässiger Verstärkungsfaktorbereich für einen zweiten, relativ hohen Impedanzwert gemessen wird;
c) ein Verstärkungsfaktor-Anpassungswert für den zweiten Wert aus dem ersten und dem zweiten Verstärkungsfaktorbereich bestimmt wird; und

d) die Schritte b) und c) für verschiedene zweite Impedanzwerte wiederholt werden.

4. Verfahren nach einem der Ansprüche 1 bis 3, wobei die Impedanz des Netzes aus Strom- und Spannungsmessungen vor dem Laden der Batterie und nach dem Laden bestimmt wird.

5. Verfahren nach Anspruch 4, wobei die Impedanz des Netzes aus der Amplitude und der Phase der Komponente von Messsignalen bei der Nennfrequenz des Versorgungsnetzes bestimmt wird.

6. Verfahren nach einem der Ansprüche 1 bis 5, wobei der variable Verstärkungsfaktor des Verstärkers in Abhängigkeit vom Widerstand des Netzes angepasst wird.

7. Vorrichtung zum Laden einer Batterie, insbesondere einer Batterie eines Kraftfahrzeugs mit wenigstens teilweise elektrischem Antrieb, umfassend eine Filterstufe (2), die dazu bestimmt ist, an ein Stromversorgungsnetz angeschlossen zu werden, eine Spannungsminderungsstufe (3), die an die Filterstufe angeschlossen ist, eine Spannungserhöhungsstufe (4), die mit der Spannungsminderungsstufe gekoppelt ist und dazu bestimmt ist, an die Batterie (B) angeschlossen zu werden, und eine Regelungseinheit (15), die der Spannungsminderungsstufe und der Spannungserhöhungsstufe zyklische Zerhackungsverhältnisse vorgeben kann und Mittel zur Kompensation der von der Spannungsminderungsstufe (3) erzeugten Harmonischen in der Filterstufe umfasst, die auf die Spannungsminderungsstufe einwirken und eine Verstärkungsstufe (28) mit variablem Verstärkungsfaktor umfassen, **dadurch gekennzeichnet, dass** die Regelungseinheit (15) Mittel zum Bestimmen der Impedanz des Versorgungsnetzes und Mittel zum Anpassen des Verstärkungsfaktors der Verstärkungsstufe in Abhängigkeit vom Wert der Impedanz des Netzes umfasst.

8. Vorrichtung zum Laden nach Anspruch 7, wobei die Regelungseinheit einen Hauptregler (20), der in der Lage ist, ein Tastverhältnis eines Steuersignals (S) zur Umschaltung der Spannungsminderungsstufe zu bestimmen, und einen Sekundärregler (22) zur Kompensation der Harmonischen, der in der Lage ist, ein Tastverhältnis eines mit dem Steuersignal kombinierten Signals zur Kompensation (S') von Harmonischen zu bestimmen, umfasst.

9. Vorrichtung zum Laden nach Anspruch 8, wobei der Sekundärregler (22) einem Komparator (25) zugeordnet ist, der in der Lage ist, den aus dem Netz entnommenen Strom ($I_{Netz}$) und einen kompensierten idealen Strom ($I_{Netz\ ideal}$) zu vergleichen, um aus dem Ergebnis dieses Vergleichs das Tastverhältnis des Kompensationssignals (S') zu ermitteln.

10. Vorrichtung zum Laden nach Anspruch 9, wobei der kompensierte ideale Strom aus einer Phasenregelschleife (26) erzeugt wird.

11. Vorrichtung zum Laden nach Anspruch 10, wobei der Sekundärregler ein elliptisches Filter (27) aufweist, das die Filterung des Ergebnisses des Vergleichs sicherstellt und der Verstärkungsstufe (28) mit regelbarem Verstärkungsfaktor zugeordnet ist, deren Ausgang an einen Stromteiler (29) angeschlossen ist, derart, dass das Tastverhältnis ($\alpha_{harm}$) des Kompensationssignals aus der folgenden Beziehung ermittelt wird:

$$\propto_{harm} = \frac{K_p \Delta I_{gefiltert}}{I_n}$$

wobei

$K_p$ den regelbaren Verstärkungsfaktor bezeichnet;

$\Delta I_{gefiltert}$ der Ausgang des elliptischen Filters ist; und

$I_n$ die Ausgangsstromstärke der Spannungsminderungsstufe (3) ist.

12. Kraftfahrzeug mit wenigstens teilweise elektrischem Antrieb, **dadurch gekennzeichnet, dass** es eine Vorrichtung zum Laden nach einem der Ansprüche 7 bis 11 aufweist.

**Claims**

1. Method of charging a battery, especially a battery of a motor vehicle with at least partial electrical traction, in which the current provided by an electrical power supply network is filtered and the electrical power of the network is fed to the battery (B) via a voltage step-down stage (3) and a voltage step-up stage (4) while controlling the chopping duty ratios of said voltage step-down stage and voltage step-up stage, and wherein the harmonics engendered by the voltage step-down stage (3) are compensated by utilizing a variable gain amplification stage (28), **characterized in that** one determines the impedance of the power supply network and adapts the variable gain as a function of the impedance of the network.

2. Method according to Claim 1, wherein the gain is adapted by using a gain value for the amplification stage (28) obtained from a mapping in which gain adaptation values for different respective impedance values are stored.

3. Method according to Claim 2, involving a preliminary step of storing of gain values in the mapping during which:

   a) one measures a first gain margin for a first relatively low impedance value;
   b) one measures a second allowable gain margin for a second relatively high impedance value;
   c) one determines a gain adaptation value for said second value based on the first and second gain margins; and
   d) one repeats steps b) and c) for different second impedance values.

4. Method according to any one of Claims 1 to 3, wherein the impedance of the network is determined from measurements of current and voltage before the charging of the battery and after the charging.

5. Method according to Claim 4, wherein the impedance of the network is determined based on the amplitude and the phase of the component of measurement signals at the rated frequency of the power supply network.

6. Method according to any one of Claims 1 to 5, wherein one adapts the gain of the variable amplifier as a function of the resistance of the network.

7. Charging device for a battery, especially a battery of a motor vehicle with at least partial electrical traction, comprising a filtering stage (2) designed to be connected to an electrical power supply network, a voltage step-down stage (3) connected to the filtering stage, a voltage step-up stage (4) coupled to the voltage step-down stage and designed to be connected to the battery (B), and a regulating unit (15) able to impose chopping duty ratios on the voltage step-down stage and the voltage step-up stage and comprising means of compensation of the harmonics engendered by the voltage step-down stage (3) in the filtering stage, acting on the voltage step-down stage and comprising a variable gain amplification stage (28), **characterized in that** the regulating unit (15) comprises means of determining the impedance of the power supply network and means of adapting the gain of the amplification stage in dependence on the value of the network impedance.

8. Charging device according to Claim 7, wherein the regulating unit comprises a main regulator (20) able to determine a duty ratio of a switching control signal (S) of the voltage step-down stage and a secondary regulator (22) for compensation of harmonics, able to determine a duty ratio of a harmonics compensation signal (S') combined with said control signal.

9. Charging device according to Claim 8, wherein the secondary regulator (22) is associated with a comparator (25) able to compare the current drawn from the network (I$_{réseau}$) and an ideal compensated current (I$_{réseau\ ideal}$) to produce the duty ratio of the compensation signal (S') from the result of said comparison.

10. Charging device according to Claim 9, wherein the ideal compensated current is produced from a phase locked loop (26).

11. Charging device according to Claim 10, wherein the secondary regulator comprises an elliptical filter (27) enabling the filtering of the result of said comparison, associated with said regulable gain amplification stage (28) whose output is connected to a current divider (29) such that the duty ratio ($\alpha_{harm}$) of the compensation signal is produced by the relation:

$$\alpha_{harm} = \frac{K_p\,\Delta I_{filtr}}{I_n}$$

where:

Kp is the regulable gain;

$\Delta I_{filtré}$ is the output of the elliptical filter; and

$I_n$ is the output current of the voltage step-down stage (3).

12. Motor vehicle with at least partial electrical traction, **characterized in that** it comprises a charging device according to any one of Claims 7 to 11.

## FIG.1

EP 3 175 528 B1

# FIG.2

# FIG.3

# FIG.4

22

Ecart courant →  27  → Ecart filtré  28 ▷ →  29  → S"

In →

# FIG.5

Diagramme de BODE

Gain (dB)

Phase (deg)

Fréquence (Hz)

# FIG.6

Diagramme de BODE

## FIG.7

# FIG.8

FIG.9A

FIG.9B

## FIG.9C

Tension

## FIG.9D

Courant

EP 3 175 528 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2943188
- FR 2964510
- FR 2974253
- FR 1358969